# EUROPÄISCHE PATENTSCHRIFT

(11) **EP 3 726 072 B1**
(45) Veröffentlichungstag und Bekanntmachung des Hinweises auf die Patenterteilung: **15.02.2023**
(21) Anmeldenummer: 20163708.9
(22) Anmeldetag: 17.03.2020
(51) Int. Cl.: F16B 25/00, F16B 25/04, F16B 25/10

(54) **SCHRAUBE FÜR HOLZWERKSTOFFE**
SCREW FOR WOODEN MATERIALS
VIS POUR MATÉRIAU À BASE DE BOIS

(30) Priorität: 16.04.2019 DE 102019205494
(43) Veröffentlichungstag der Anmeldung: 21.10.2020
(73) Patentinhaber: SWG Schraubenwerk Gaisbach GmbH, 74638 Waldenburg (DE)
(72) Erfinder: Mugler, Manuel, 74653 Ingelfingen (DE)
(74) Vertreter: Patentanwälte Ruff, Wilhelm, Beier, Dauster & Partner mbB

(56) Entgegenhaltungen:
- WO-A1-2019/016092
- DE-A1-102015 107 467
- DE-U1- 9 314 006

## Beschreibung

Die Erfindung betrifft eine Schraube für Holzwerkstoffe mit einem Schaft, wobei der Schaft eine Schraubenspitze und einen Schraubenkopf mit einer Antriebsausbildung an dem, der Schraubenspitze gegenüberliegenden Ende des Schafts aufweist.

Holzschrauben benötigen auf der einen Seite eine sich verjüngende Spitze, so dass die Holzschraube auch in nicht vorgebohrte Holzmaterialien eingeschraubt werden kann. Beim Einschrauben verdrängt die Spitze das Holzmaterial zur Seite und schafft so den notwendigen Raum, um die Schraube in dem Holzwerkstoff anzuordnen. Diese Verdrängungswirkung der Spitze einer Holzschraube führt aber auch zu einer unerwünschten Spaltwirkung. Speziell dann, wenn Holzschrauben in der Nähe von Begrenzungen des Holzwerkstoffs eingeschraubt werden, kann der Holzwerkstoff durch die Spaltwirkung der Spitze reißen. In der Regel führt dies zu einer Zerstörung des Holzwerkstoffs bzw. des Bauteils, das aus dem Holzwerkstoff gefertigt ist.

Aus der internationalen Offenlegungsschrift WO 2019/016092 A1 ist eine Schraube für Holzwerkstoffe mit einem Schaft bekannt, wobei der Schaft eine Schraubenspitze und einen Schraubenkopf mit einer Antriebsausbildung an dem, der Schraubenspitze gegenüberliegenden Ende des Schafts aufweist. Ausgehend von dem zylindrischen Teil des Schafts verjüngt sich die Schraubenspitze zunächst kegelstumpfförmig in einem Übergangsabschnitt und dann, nach einem weiteren zylindrischen Abschnitt, mittels einer abgeschrägten Stufe. Auf die abgeschrägte Stufe folgt dann eine Schraubenspitze in Form eines rotationssymmetrischen Grundkörpers mit einer konvex gekrümmten Außenkontur.

Aus der deutschen Offenlegungsschrift DE 10 2015 107 467 A1 ist eine Schraube für Holzwerkstoffe mit einem Schaft bekannt, wobei der Schaft eine Schraubenspitze und einen Schraubenkopf mit einer Antriebsausbildung an dem, der Schraubenspitze gegenüberliegenden Ende des Schafts aufweist und wobei der Schaft wenigstens abschnittsweise mit einem Gewinde versehen ist. Neben dem Gewinde kann eine umlaufende Wendel vorgesehen sein, die mit gleicher Steigung wie das Gewinde umläuft und die sich bis in die sich verjüngende Schraubenspitze erstreckt. Die umlaufende Wendel bildet dabei in einer Schnittebene parallel zur Mittellängsachse des Schafts gesehen Stufen. Die Wendel endet vor der sich verjüngenden Schraubenspitze.

Aus der deutschen Gebrauchsmusterschrift DE 93 14 006 U1 ist eine Bohrschraube bekannt, die ausgehend von einem Schraubenkopf mit einer Antriebsausbildung einen zylindrischen Schaft mit einem Gewinde aufweist. In Richtung auf die Schraubenspitze gesehen schließt sich an das Gewinde eine Bohrspitze an. Die Bohrspitze verjüngt sich ausgehend vom zylindrischen Schaft in zwei Stufen. Im Bereich der Bohrspitze ist der Schaft mit einem in axialer Richtung verlaufenden Einschnitt versehen, an dessen Kanten Bohrschneiden ausgebildet sind.

Mit der Erfindung soll eine Schraube für Holzwerkstoffe hinsichtlich einer Verringerung ihrer Spaltwirkung verbessert werden.

Erfindungsgemäß ist hierzu eine Schraube für Holzwerkstoffe mit den Merkmalen von Anspruch 1 vorgesehen. Es ist eine Schraube für Holzwerkstoffe mit einem Schaft vorgesehen, wobei der Schaft eine Schraubenspitze und einen Schraubenkopf mit einer Antriebsausbildung an dem, der Schraubenspitze gegenüberliegenden Ende des Schafts aufweist und wobei der Schaft wenigstens abschnittsweise mit einem Gewinde versehen ist, bei der die Schraubenspitze ausgehend von einem zylindrischen Teil des Schafts sich in mehreren Stufen bis zum freien Ende der Schraubenspitze verjüngt.

Überraschenderweise hat sich herausgestellt, dass eine sich in mehreren Stufen bis zu ihrem Ende verjüngende Schraubenspitze eine gegenüber konventionellen Schraubenspitzen deutlich verringerte Spaltwirkung zeigt. Die Stufen laufen vorteilhafterweise senkrecht zur Axialrichtung der Schraube oder senkrecht zur Mittellängsachse der Schraube um. Die Stufen haben dadurch keine Gewindewirkung und sind nicht Teil eines Gewindes. Als Ende der Schraubenspitze wird dabei das dem Übergang in den zylindrischen Schraubenschaft gegenüberliegende Ende bezeichnet. Dennoch dringt die gestufte Schraubenspitze problemlos in Holzwerkstoffe ein. Es wird vermutet, dass jede der mehreren Stufen der Schraubenspitze eine Stanzwirkung aufweist, so dass also die Holzfasern nicht nur nach außen verdrängt werden, sondern durch die mehreren Stufen durchtrennt und erst im durchtrennten Zustand nach außen verdrängt werden. Es wird weiter davon ausgegangen, dass das Verdrängen der bereits durchtrennten Holzfasern eine verringerte Spaltwirkung zur Folge hat. Die Stufen können dabei in unterschiedlicher Weise ausgebildet sein und beispielsweise einen zylindrischen Stufenabschnitt und einen senkrecht zur Mittelachse angeordneten Absatzabschnitt oder auch kegelstumpfförmige Stufenabschnitte und kegelstumpfförmige Absatzabschnitte aufweisen, sowie auch Kombinationen dieser unterschiedlich ausgestalteten Stufenabschnitte und Absatzabschnitte. Als Stufenabschnitt wird dabei ein Abschnitt der Stufe bezeichnet, der entweder parallel zur Mittellängsachse verläuft oder in einem kleinen Winkel zur Mittellängsachse angeordnet ist. Vorteilhafterweise verjüngt sich ein kegelstumpfförmiger Stufenabschnitt in Richtung auf das freie Ende der Schraubenspitze. Als Absatzabschnitt wird eine entweder senkrecht zur Mittellängsachse angeordnete Fläche der Stufe oder eine kegelstumpfförmige Fläche bezeichnet, die in einem Winkel zwischen 90° und 45° zur Mittellängsachse angeordnet ist. Vorteilhafterweise verjüngt sich der kegelstumpfförmige Absatzabschnitt in Richtung auf das freie Ende der Schraubenspitze. Jeder Stufenabschnitt und jeder Absatzabschnitt bilden dabei einen geschlossenen Ring um die Mittellängsachse der Schraube. Das Gewinde kann unmittelbar am Ende der Spitze beginnen oder optional erst etwas zurückgesetzt vom Ende der Spitze. Das Gewinde kann infolgedessen über die Stufen hinweglaufen.

Gemäß der Erfindung weisen wenigstens zwei Stufen einen senkrecht zur Mittellängsachse oder in einem Winkel zwischen 90° und 45° zur Mittellängsachse angeordneten Absatzabschnitt und einen parallel zur Mittellängsachse, in einem Winkel von mehr als 0° bis zu einem Winkel von 10° oder in einem Winkel von weniger als 0° bis zu einem Winkel von -10° zur Mittellängsachse angeordneten Stufenabschnitt auf, wobei der Stufenabschnitt in Richtung der Mittellängsachse der Schraube gesehen mindestens so lang ist wie der Absatzabschnitt.

Mittels der umlaufenden Kante zwischen jedem Stufenabschnitt und jedem Absatzabschnitt wird eine Stanzwirkung der erfindungsgemäßen Schraube erzielt. Gleichzeitig sorgen die Absatzabschnitte und Stufenabschnitte für eine Verdrängung des Holzwerkstoffs nach außen beim Eindrehen der Schraubenspitze. Hinterschnitte sind bei negativen Winkeln des Stufenabschnitts möglich. Der Stufenabschnitt kann gleich lang wie der Absatzabschnitt oder länger als der Absatzabschnitt sein.

In Weiterbildung der Erfindung ist der Stufenabschnitt in Richtung der Mittellängsachse der Schraube gesehen bis zehnmal so lang wie der Absatzabschnitt der Stufe.

Mittels einer solchen Bemessung lässt sich ein gutes Eindringverhalten bei stark verringerter Spaltwirkung erzielen.

In Weiterbildung der Erfindung weist wenigstens eine Stufe in Richtung der Mittellängsachse der Schraube gesehen eine Länge auf, die mindestens die Hälfte des Kerndurchmessers des Gewindes auf dem Schaft beträgt.

Eine solche Bemessung einer Stufe sorgt für eine gute Eindringwirkung bei stark verringerter Spaltwirkung.

In Weiterbildung der Erfindung nimmt eine Länge der Stufen in Richtung auf das Ende der Schraubenspitze zu ab.

Auch auf diese Weise lässt sich ein gutes Eindringverhalten bei stark verringerter Spaltwirkung erzielen.

In Weiterbildung der Erfindung weist die in Richtung auf das Ende der Schraube zu gesehen letzte Stufe einen zwischen dem Ende der Schraubenspitze und dem Absatzabschnitt angeordneten kegelförmigen Stufenabschnitt auf.

Mittels eines solchen kegelförmigen Stufenabschnitts, der in einer punktförmigen Spitze endet, kann die erfindungsgemäße Holzschraube verlässlich angesetzt werden und verläuft beim Eindrehen nicht auf dem Holzwerkstoff. Der auf den kegelförmigen Stufenabschnitt folgende Absatzabschnitt der letzten Stufe sorgt dann für eine verringerte Spaltwirkung im Vergleich zu einer durchgehend kegelförmigen Spitze.

In Weiterbildung der Erfindung weist jede Stufe einen kegelstumpfförmigen Absatzabschnitt mit einem Winkel zwischen annähernd 0° und 45°, insbesondere 25° zu einer Ebene, die senkrecht zu einer Mittellängsachse der Schraube angeordnet ist, auf.

In Bezug auf die Mittellängsachse und damit die Vorschubrichtung der Schraube ist der Absatzabschnitt damit in einem stumpfen Winkel angeordnet und wird mehr oder weniger durch den Holzwerkstoff hindurchgeschoben. Ein Kegelwinkel, entsprechend dem Öffnungswinkel eines dem kegelstumpfförmigen Absatzabschnitt zugrunde liegenden Kegels, liegt also zwischen annähernd 180° und 90°.

In Weiterbildung der Erfindung weist jede Stufe einen kegelstumpfförmigen Stufenabschnitt mit einem Winkel zwischen mehr als 0° bis zu einem Winkel von 10° oder in einem Winkel von weniger als 0° bis zu einem Winkel von -10° zu einer Mittellängsachse der Schraube auf.

Bezüglich der Mittellängsachse und damit der Vorschubrichtung der Schraube ist der Stufenabschnitt damit in einem spitzen Winkel angeordnet und kann dadurch vergleichsweise leicht in den Holzwerkstoff vordringen. Ein Kegelwinkel eines dem kegelstumpfförmigen Stufenabschnitt zugrunde liegenden Kegels liegt dann zwischen annähernd 0° und ±20°.

In Weiterbildung der Erfindung beträgt eine Durchmesserverringerung an jeder Stufe zwischen 10% und 50%, insbesondere 18% bis 21%, des Kerndurchmessers des Gewindes des Schafts.

Solche abgestuften Durchmesserverringerungen ermöglichen ein gutes Eindringverhalten der Schraube bei verringerter Spaltwirkung. Die Durchmesserverringerung bezieht sich dabei auf den Kerndurchmesser des Gewindes oder den Kerndurchmesser des profilierten Schafts.

In Weiterbildung der Erfindung weist die Schraubenspitze mehrere Stufen, insbesondere vier Stufen, auf.

Das Vorsehen von mehreren Stufen, insbesondere vier Stufen, hat sich als vorteilhaft erwiesen, nicht nur bezüglich des Eindringverhaltens und der Spaltwirkung, sondern auch bezüglich der Herstellbarkeit der erfindungsgemäßen Schraube.

In Weiterbildung der Erfindung beginnt das Gewinde in einem Abstand von dem Ende der Schraubenspitze.

In Weiterbildung der Erfindung ist zwischen dem Ende der Spitze und dem Beginn des Gewindes ein kegelförmiger Abschnitt angeordnet.

Der kegelförmige Abschnitt beginnt somit am punktförmigen Ende der Schraubenspitze und sorgt für ein sicheres Ansetzen der Schraube, so dass diese beim Einschrauben nicht verläuft. Der kegelförmige Abschnitt kann dabei so bemessen sein, dass die Schraube mit geringem Axialdruck und ohne zu rotieren bereits bis zum Beginn des Gewindes in den Holzwerkstoff eingedrückt werden kann. Beginnt sich die Schraube dann zu drehen, kann das Gewinde sofort in den Holzwerkstoff eingreifen und einen Vorschub der Schraube in den Holzwerkstoff hinein bewirken. Dadurch wird ein sehr gutes sogenanntes Anbeißverhalten der Schraube erzielt.

In Weiterbildung der Erfindung ist im Bereich der Schraubenspitze wenigstens eine Schaberippe vorgesehen.

Mittels einer solchen Schaberippe lässt sich unter anderem eine Spaltwirkung der Schraube verringern.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale aus den Zeichnungen oder der Beschreibung lassen sich dabei in beliebiger Weise miteinander kombinieren, ohne den Rahmen der Erfindung zu überschreiten. Dies gilt auch für die Kombination von Einzelmerkmalen ohne weitere Merkmale, mit denen sie zusammen gezeigt oder beschrieben sind. In den Zeichnungen zeigen:
- Fig. 1: eine bevorzugte Ausführungsform einer erfindungsgemäßen Schraube in einer Seitenansicht,
- Fig. 2: eine vergrößerte Darstellung der Einzelheit A der Schraube der Fig. 1,
- Fig. 3: eine vergrößerte abschnittsweise Darstellung der Schraube der Fig. 1 im Bereich der Schraubenspitze,
- Fig. 4: eine weitere vergrößerte abschnittsweise Darstellung der Schraube der Fig. 1 im Bereich der Schraubenspitze,
- Fig. 5: eine Schnittansicht der Schraube der Fig. 1,
- Fig. 6: eine vergrößerte Einzelheit der Schnittansicht der Fig. 5 im Bereich der Schraubenspitze und
- Fig. 7: eine vergrößerte Darstellung der Schraubenspitze einer weiteren erfindungsgemäßen Schraube.

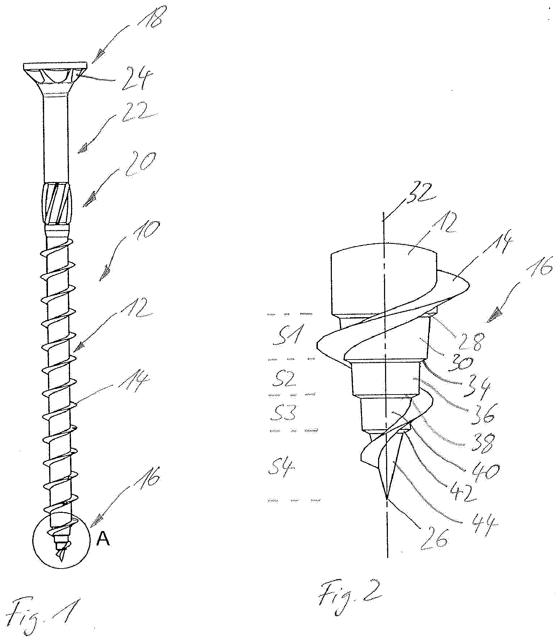

Fig. 1 zeigt eine erfindungsgemäße Schraube 10, die für Holzwerkstoffe, beispielsweise Massivholz, Leimholz, Spanplatten, MDF-Platten, Schichtholz, Sperrholz, und dergleichen vorgesehen ist.

Die Schraube 10 weist einen Schaft 12 auf, der abschnittsweise mit einem Gewinde 14 versehen ist. Der Schaft 12 weist eine sich verjüngende Schraubenspitze 16 und an dem, der Schraubenspitze 16 gegenüberliegenden Ende des Schafts einen Schraubenkopf 18 auf. Der Schraubenkopf 18 ist mit einer in Fig. 1 nicht erkennbaren Antriebsausbildung in seiner oberen Stirnseite versehen, beispielsweise einer Vertiefung, die als Drehantriebsausbildung ausgestaltet ist.

In Richtung auf den Schraubenkopf 18 zu folgt auf die Schraubenspitze 16 ein zylindrischer Abschnitt des Schafts 12, der mit dem Gewinde 14 versehen ist. An den Abschnitt mit dem Gewinde 14 schließt sich ein Fräsabschnitt 20 an, der mit einem Steilgewinde versehen ist. Zwischen dem Fräsabschnitt 20 und dem Schraubenkopf 18 ist ein zylindrischer Abschnitt 22 des Schafts ohne Gewinde vorgesehen. Der Kopf 18 ist auf seiner Unterseite kegelstumpfförmig ausgebildet und weist über seinen Umfang gesehen mehrere Frästaschen 24 auf. Die Frästaschen 24 sorgen dafür, dass der Schraubenkopf 18 leicht in der Oberfläche eines Holzwerkstoffs versenkt werden kann, so dass der Schraubenkopf 18 mit seiner Oberseite dann bündig oder gar versenkt in der Oberfläche des Holzwerkstoffs angeordnet werden kann.

Im Rahmen der Erfindung können der Fräsabschnitt und der glatte, zylindrische Abschnitt 22 entfallen und auch der Schraubenkopf 18 kann abgeändert bzw. in beliebiger Weise ausgestaltet werden. Beispielsweise kann der Schraubenkopf 18 auch als Sechskantkopf ausgebildet sein. Die Schraube 10 kann auch nach Art einer Stiftschraube ausgeführt sein, bei der also der Schraubenkopf 18 denselben Außendurchmesser wie der Schaft 12 im zylindrischen Abschnitt mit dem Gewinde 14 aufweist. Eine Stirnseite des Kopfes muss aber immer mit einer geeigneten Drehantriebsausbildung versehen sein.

Bereits anhand der Fig. 1 ist zu erkennen, dass die Schraubenspitze 16 sich in mehreren Stufen bis zum freien Ende der Schraubenspitze verjüngt.

Die Einzelheit A mit der Schraubenspitze 16 ist vergrößert in Fig. 2 dargestellt. Die Schraubenspitze 16 verjüngt sich in insgesamt vier Stufen S1, S2, S3 und S4 bis zum punktförmigen Ende 26 der Schraubenspitze 16. Ausgehend von dem zylindrischen Abschnitt des Schraubenschafts 12 in Richtung auf das freie Ende 26 der Schraubenspitze 16 folgen die Stufen S1, S2, S3 und S4 hintereinander. Mit jeder der Stufen S1, S2, S3 und S4 erfolgt eine Durchmesserverringerung um etwa 1/10 des Durchmessers des zylindrischen Abschnitts des Schraubenschafts 12. Mit der letzten Stufe S4 erfolgt zunächst eine Durchmesserverringerung um 1/10 des Kerndurchmessers des zylindrischen Abschnitts des Schraubenschafts 12, anschließend weist die Stufe S4 einen kegelförmigen Stufenabschnitt auf, der den Durchmesser der Schraubenspitze 16 dann bis zum freien Ende 26 auf null verringert.

Die Stufe S1 weist einen ersten Absatzabschnitt 28 auf, der kegelstumpfförmig gestaltet ist und sich in Richtung auf das freie Ende 26 der Schraubenspitze 16 verjüngt. Weiter weist die erste Stufe S1 einen ersten Stufenabschnitt 30 auf, der ebenfalls kegelstumpfförmig ausgebildet ist und sich in Richtung auf das freie Ende 26 der Schraubenspitze zu verjüngt. Ein Kegelwinkel des Absatzabschnitts 28 ist wesentlich größer als ein Kegelwinkel des Stufenabschnitts 30. Ein Kegelwinkel des ersten Absatzabschnitts 28 kann zwischen annähernd 180° und 90° liegen. Die Absatzfläche des ersten Absatzabschnitts 28 ist dann also in einem Winkel zwischen annähernd 0° und 45° zu einer Ebene angeordnet, die senkrecht zur Mittellängsachse 32 der Schraube angeordnet ist.

Ein Kegelwinkel des ersten Stufenabschnitts 30 kann im Rahmen der Erfindung zwischen annähernd 0° und ±20° liegen. Eine Stufenfläche des ersten Stufenabschnitts 30 ist infolgedessen in einem Winkel zwischen annähernd 0° und ±10° zu der Mittellängsachse 32 angeordnet.

Bei der dargestellten Ausführungsform, die als besonders vorteilhaft angesehen wird, ist die Absatzfläche des ersten Absatzabschnitts 28 in einem Winkel von 25° zu einer Ebene angeordnet, die senkrecht zur Mittellängsachse 32 der Schraube angeordnet ist, und die Stufenfläche des ersten Stufenabschnitts 30 ist in einem Winkel von 5° zur Mittellängsachse 32 angeordnet.

Die zweite Stufe S2 weist einen zweiten Absatzabschnitt 34 und einen zweiten Stufenabschnitt 36 auf. Der zweite Absatzabschnitt 34 und der zweite Stufenabschnitt 36 sind jeweils kegelstumpfförmig ausgebildet. Für die Bemessung der Kegelwinkel des zweiten Absatzabschnitts 34 und der Bemessung der Kegelwinkel des zweiten Stufenabschnitts 36 gelten dieselben Grenzen, die vorstehend anhand des ersten Absatzabschnitts 28 und des ersten Stufenabschnitts 30 beschrieben wurden.

Bei der dargestellten, als besonders vorteilhaft angesehenen Ausführungsform ist eine Absatzfläche des zweiten Absatzabschnitts 34 in einem Winkel von 25° zu einer Ebene angeordnet, die senkrecht zur Mittellängsachse 32 angeordnet ist. Eine Stufenfläche des zweiten Stufenabschnitts 36 ist in einem Winkel von 5° zur Mittellängsachse 32 angeordnet.

Die dritte Stufe S3 weist einen dritten Absatzabschnitt 38 und einen dritten Stufenabschnitt 40 auf. In Bezug auf die Kegelwinkel des dritten Absatzabschnitts 38 und des dritten Stufenabschnitts 40 gelten die gleichen Grenzen, wie sie vorstehend anhand des ersten Absatzabschnitts 28 und des ersten Stufenabschnitts 30 beschrieben wurden.

Bei der dargestellten, als besonders vorteilhaft angesehenen Ausführungsform ist eine Absatzfläche des dritten Absatzabschnitts 38 in einem Winkel von 25° zu einer Ebene angeordnet, die senkrecht zur Mittellängsachse 32 angeordnet ist. Eine Stufenfläche des dritten Stufenabschnitts 40 ist in einem Winkel von 5° zur Mittellängsachse 32 angeordnet.

Es ist Fig. 2 zu entnehmen, dass sich eine Länge der Stufen S1, S2, S3 in Richtung auf das freie Ende 26 der Schraubenspitze 16 zu fortlaufend verringert. So ist die erste Stufe S1 länger als die zweite Stufe S2 und die dritte Stufe S3 ist noch geringfügig kürzer als die zweite Stufe S2.

Die vierte Stufe S4 weist einen vierten Absatzabschnitt 42 und einen vierten Stufenabschnitt 44 auf. Für die Bemessung des Kegelwinkels des vierten Absatzabschnitts 42 gelten die gleichen Begrenzungen, die vorstehend anhand des ersten Absatzabschnitts 28 erläutert wurden.

Bei der dargestellten, als besonders vorteilhaft angesehenen Ausführungsform ist eine Absatzfläche des vierten Absatzabschnitts 42 in einem Winkel von 25° zu einer Ebene angeordnet, die senkrecht zur Mittellängsachse 32 angeordnet ist.

Der vierte Stufenabschnitt 44 ist anders ausgebildet als der erste, zweite und dritte Stufenabschnitt 30, 36, 40. Der vierte Stufenabschnitt 44 ist in Form eines Kegels ausgebildet und endet an dem punktförmigen freien Ende 26 der Schraubenspitze 16. In Längsrichtung der Schraube gesehen ist der vierte Stufenabschnitt 44 länger als der erste Stufenabschnitt 30, als der zweite Stufenabschnitt 36 und als der dritte Stufenabschnitt 40. Die vierte Stufe S4 ist somit auch länger als die erste bis dritte Stufe S1, S2, S3.

Ein Kegelwinkel des vierten Stufenabschnitts 44 liegt bei der dargestellten Ausführungsform bei etwa 28°, kann im Rahmen der Erfindung aber auch andere Werte annehmen.

Das Gewinde 14 beginnt, wie Fig. 2 zu entnehmen ist, in einem Abstand von dem freien Ende 26 der Schraubenspitze 16 und verläuft dann wendelförmig um den Schaft 12, zunächst im Bereich der Schraubenspitze 16 und dann im zylindrischen Abschnitt des Schafts 12. Über die Schraubenspitze 16 verlaufen lediglich ein wenig mehr als eine Windung des Gewindes 14. Diese Steigung des Gewindes 14 kann aber im Rahmen der Erfindung selbstverständlich variiert werden.

Wird die Schraube 10 auf die Oberfläche eines Holzwerkstoffs aufgesetzt, so dringt bereits unter leichtem axialen Druck das punktförmige freie Ende 26 in die Oberfläche des Holzwerkstoffs ein. Der kegelförmige erste Stufenabschnitt verdrängt dabei den Holzwerkstoff nach außen. Wird die Schraube 10 dann in Drehung versetzt, dringt der kegelförmige Stufenabschnitt 44 entweder weiter in den Holzwerkstoff ein, bis der Beginn des Gewindes 14 in den Holzwerkstoff eingreift, oder der Stufenabschnitt 44 ist alleine durch das Aufsetzen der Schraube bereits so weit in die Oberfläche des Holzwerkstoffs eingedrungen, dass das Gewinde 14 unmittelbar nach dem Beginn einer Drehbewegung der Schraube in dem Holzwerkstoff greift und dadurch einen Vorschub der Schraube in den Holzwerkstoff hinein bewirkt.

Sobald das Gewinde 14 in dem Holzwerkstoff greift und einen Vorschub der Schraube in den Holzwerkstoff hinein bewirkt, wird auch die Schraubenspitze 16 in den Holzwerkstoff hineingezogen. Dabei sorgen die einzelnen Stufen S4, S3, S2 und S1 für eine Verdrängung des Holzwerkstoffs nach außen bis auf den Durchmesser des zylindrischen Abschnitts des Schraubenschafts 12. Die Absatzabschnitte 42, 38, 34 und 28 unterbrechen dabei die insgesamt annähernd kegelige Form der Schraubenspitze 16 und verringern dadurch eine Spaltwirkung der Schraubenspitze 16. Es wird angenommen, dass die Absatzabschnitte 42, 38, 34 und 28 jeweils eine Stanzwirkung oder zumindest Trennwirkung haben und infolgedessen die nach außen verdrängten Holzfasern durchtrennen. Es wird weiter angenommen, dass dadurch die deutlich verringerte Spaltwirkung der sich in mehreren Stufen S1, S2, S3 und S4 verjüngenden Schraubenspitze 16 bewirkt wird.

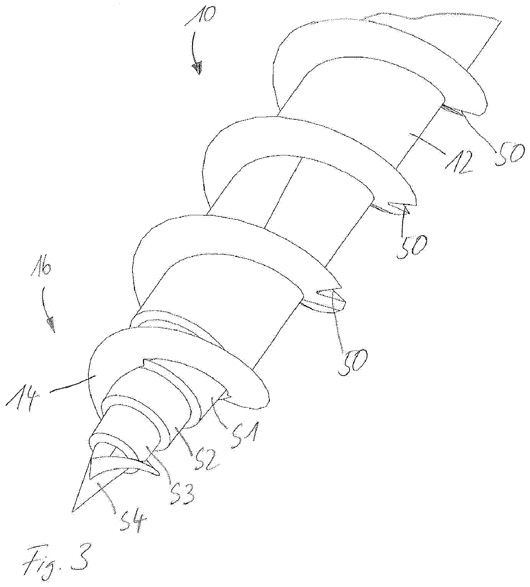

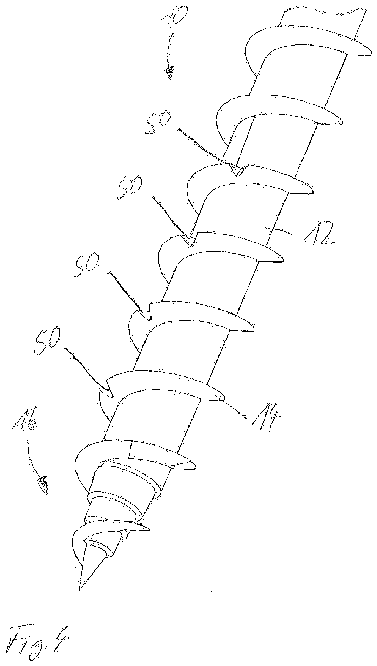

Die Darstellung der Fig. 3 zeigt die Schraube 10 der Fig. 1 abschnittsweise. Zu erkennen ist die Schraubenspitze 16 sowie noch ein Stück des zylindrischen Abschnitts des Schafts 12. Man erkennt in der Fig. 3 die vier Stufen S1, S2, S3 und S4 der Schraubenspitze 16. Gut zu erkennen ist in Fig. 3 der Beginn des Gewindes 14 etwa auf der halben Länge der letzten Stufe S4. Es ist in Fig. 3 weiter zu erkennen, dass das Gewinde 14 mit mehreren Spanbrechernuten 50 versehen ist. Diese Spanbrechernuten 50 sind, vgl. Fig. 4, an insgesamt vier Gewindegängen des Gewindes 14 im zylindrischen Abschnitt des Schafts 12 angeordnet und sind jeweils in Form von V-förmigen Einschnitten in die Gewindeflanken realisiert. Die Spanbrechernuten 50 liegen nicht in gerader Linie hintereinander, sondern folgen einer schräg zur Mittellängsachse 32 angeordneten Linie, wobei diese gedachte Linie in der gleichen Richtung zur Mittellängsachse geneigt ist wie die Gewindeflanken des Gewindes 14.

Fig. 4 zeigt eine weitere abschnittsweise Ansicht der Schraube 10, wobei wieder ein Teil des zylindrischen Abschnitts des Schraubenschafts 12 und die Schraubenspitze 16 zu erkennen sind. Weiter ist zu erkennen, dass die vier Spanbrechernuten 50 des Gewindes 14 an der dritten, vierten, fünften und sechsten Windung des Gewindes 14 angeordnet sind.

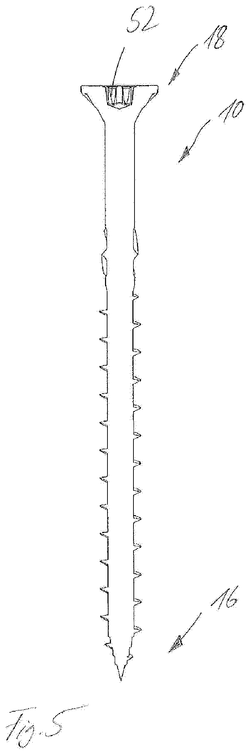

Fig. 5 zeigt eine Schnittansicht der Schraube 10 der Fig. 1. In dieser Ansicht ist im Schraubenkopf 18 eine Vertiefung 52 zu erkennen, die als Drehantriebsausbildung ausgeführt ist. Weiter ist die stufenförmige Durchmesserverringerung im Bereich der Schraubenspitze 16 gut zu erkennen.

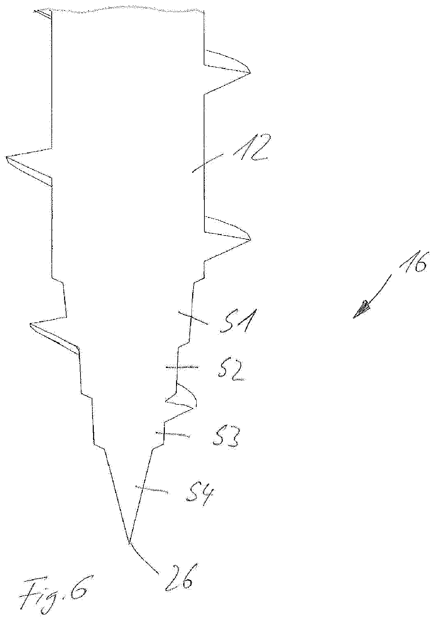

Fig. 6 zeigt eine vergrößerte Einzelheit der Schnittansicht der Fig. 5 im Bereich der Schraubenspitze 16. Ausgehend vom zylindrischen Abschnitt des Schraubenschafts 12 verringert sich der Durchmesser des Schraubenschafts 12 an der Schraubenspitze 16 stufenweise durch die Stufen S1, S2, S3 und S4. Im Verlauf der vierten und letzten Stufe S4 verringert sich der Durchmesser der Schraubenspitze 16 bis zum freien Ende 26 der Schraubenspitze 16 bis auf null.

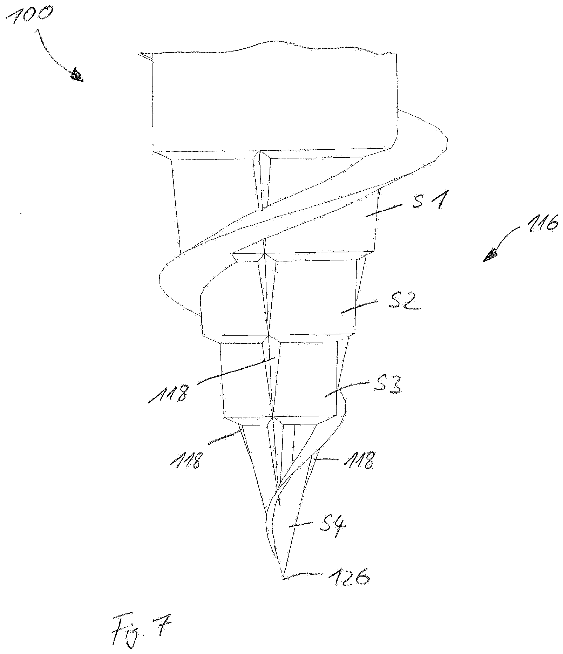

Fig. 7 zeigt abschnittsweise eine weitere erfindungsgemäße Schraube 100, wobei lediglich der Bereich der Schraubenspitze 116 vergrößert dargestellt ist. Die Schraubenspitze 116 der Schraube 100 ist prinzipiell gleich aufgebaut wie die Schraubenspitze 16 der Schraube 10 der Fig. 1 bis 6, so dass nur noch die sich von der Schraubenspitze 16 der Schraube 10 unterscheidenden Merkmale erläutert werden.

Speziell ist die Schraube 100 im Bereich ihrer Schraubenspitze 116 mit insgesamt vier Schaberippen 118 versehen, von denen in Fig. 7 lediglich drei zu erkennen sind und die gleichmäßig beabstandet um den Umfang der Schraubenspitze 116 verteilt sind. Die Schaberippen 118 verlaufen jeweils in Ebenen, die die Mittellängsachse der Schraube 100 enthalten und weisen jeweils einen dreieckförmigen Querschnitt auf. Die Schaberippen 118 laufen also geradlinig auf das punktförmige Ende 126 der Schraubenspitze 116 zu. Die Schaberippen 118 weisen einen dreieckigen Querschnitt auf. Da die Schaberippen 118 an der Außenkontur der Schraubenspitze 116 verlaufen, ändert sich der dreieckige Querschnitt der Schaberippen 118 im Verlauf jeder der Stufen S1, S2, S3 und S4 und der Querschnitt ändert sich sprunghaft am Übergang zwischen zwei Stufen S1, S2, S3 und S4. Der kegelförmige Abschnitt S4 der Schraubenspitze, der am punktförmigen Ende 126 endet, ist nur teilweise mit den Schaberippen 118 versehen. Die Schaberippen 118 enden bei etwas mehr als der Hälfte der Länge des kegelförmigen Abschnitts S4, so dass zwischen dem Ende der Schaberippen 118 und dem punktförmigen Ende 126 ein Abschnitt verbleibt, in dem keine Schaberippen 118 vorgesehen sind. Am anderen Ende enden die Schaberippen 118 mit dem Ende der ersten Stufe S1 und damit mit dem Übergang in den zylindrischen Abschnitt des Schafts. Durch die Schaberippen kann das Einschraubverhalten der Schraube 100 verbessert werden, speziell kann die Spaltwirkung der Schraubenspitze 116 weiter verringert werden.

## Patentansprüche

1. Schraube (10; 100) für Holzwerkstoffe mit einem Schaft (12), wobei der Schaft (12) eine Schraubenspitze (16; 116) und einen Schraubenkopf (18) mit einer Antriebsausbildung an dem, der Schraubenspitze (16; 116) gegenüberliegenden Ende des Schafts (12) aufweist und wobei der Schaft (12) wenigstens abschnittsweise mit einem Gewinde (14) versehen ist, **dadurch gekennzeichnet, dass** die Schraubenspitze (16; 116) ausgehend von einem zylindrischen Teil des Schafts (12) sich in mehreren Stufen (S1, S2, S3, S4) bis zum Ende der Schraubenspitze (16; 116) verjüngt, wobei das Gewinde (14) über die Stufen (S1, S2, S3, S4) hinwegläuft, dass wenigstens zwei Stufen (S1, S2, S3, S4) einen senkrecht zur Mittellängsachse (32) oder in einem Winkel zwischen 90° und 45° zur Mittellängsachse (32) angeordneten Absatzabschnitt (28, 34, 38, 42) und einen parallel zur Mittellängsachse (32), in einem Winkel von mehr als 0° bis zu einem Winkel von 10° oder in einem Winkel von weniger als 0° bis zu einem Winkel von -10° zur Mittellängsachse (32) angeordneten Stufenabschnitt (30, 36, 40, 44) aufweisen, wobei der Stufenabschnitt (30, 36, 40, 44) in Richtung der Mittellängsachse (32) der Schraube (10; 100) gesehen mindestens so lang ist, wie der Absatzabschnitt (28, 34, 38, 42), dass zwischen jedem Stufenabschnitt (30, 36, 40, 44) und jedem Absatzabschnitt (28, 34, 38, 42) eine umlaufende Kante zum Erzielen einer Stanzwirkung gebildet ist, und dass jeder Absatzabschnitt (28, 34, 38, 42) und jeder Stufenabschnitt (30, 36, 40, 44) einer Stufe (S1, S2, S3, S4) einen geschlossenen Ring um die Mittellängsachse (32) der Schraube (10; 100) bildet.

2. Schraube nach Anspruch 1, **dadurch gekennzeichnet, dass** der Stufenabschnitt (30, 36, 40, 44) in Richtung der Mittellängsachse (32) der Schraube (10; 100) gesehen bis zehnmal so lang ist wie der Absatzabschnitt (28, 34, 38, 42) der Stufe (S1, S2, S3, S4).

3. Schraube nach einem der vorstehenden Ansprüche, **dadurch gekennzeichnet, dass** wenigstens eine Stufe in Richtung der Mittellängsachse der Schraube gesehen eine Länge aufweist, die mindestens die Hälfte des Kerndurchmessers des Gewindes auf dem Schaft beträgt.

4. Schraube nach einem der vorstehenden Ansprüche, **dadurch gekennzeichnet, dass** eine Länge mehrerer aufeinanderfolgender Stufen (S1, S2, S3, S4) in Richtung auf das freie Ende (26; 126) der Schraubenspitze zu abnimmt.

5. Schraube nach einem der vorstehenden Ansprüche, **dadurch gekennzeichnet, dass** die in Richtung auf das Ende der Schraube (10; 100) zu gesehen letzte Stufe (54) einen zwischen dem Ende (26; 126) der Schraubenspitze (16; 116) und dem Absatzabschnitt (42) angeordneten kegelförmigen Stufenabschnitt (44) aufweist.

6. Schraube nach einem der vorstehenden Ansprüche, **dadurch gekennzeichnet, dass** jede Stufe (S1, S2, S3, S4) einen kegelstumpfförmigen Absatzabschnitt (28, 34, 38, 42) mit einem Winkel zwischen 90° und 45°, insbesondere 25°, zu einer Mittellängsachse (32) der Schraube (10; 100), aufweist.

7. Schraube nach einem der vorstehenden Ansprüche, **dadurch gekennzeichnet, dass** jede Stufe (S1, S2, S3, S4) einen kegelstumpfförmigen Stufenabschnitt (30; 36; 40) mit einem Winkel zwischen mehr als 0° bis zu einem Winkel von 10° oder in einem Winkel von weniger als 0° bis zu einem Winkel von -10° zu einer Mittellängsachse (32) der Schraube (10; 100) aufweist.

8. Schraube nach einem der vorstehenden Ansprüche, **dadurch gekennzeichnet, dass** eine Durchmesserverringerung an jeder Stufe (S1, S2, S3, S4) zwischen 10% und 50%, insbesondere 18% bis 21%, des Kerndurchmessers des Gewindes (14) des Schafts (12) beträgt.

9. Schraube nach einem der vorstehenden Ansprüche, **dadurch gekennzeichnet, dass** die Schraubenspitze (16; 116) mehrere Stufen (S1, S2, S3, S4) aufweist.

10. Schraube nach einem der vorstehenden Ansprüche, **dadurch gekennzeichnet, dass** das Gewinde (14) in einem Abstand von dem Ende (26; 126) der Schraubenspitze (16; 116) beginnt.

11. Schraube nach einem der vorstehenden Ansprüche, **dadurch gekennzeichnet, dass** zwischen dem Ende (26; 126) der Spitze (16; 116) und dem Beginn des Gewindes (14) ein kegelförmiger Abschnitt angeordnet ist.

12. Schraube nach einem der vorstehenden Ansprüche, **dadurch gekennzeichnet, dass** im Bereich der Schraubenspitze (116) wenigstens eine Schaberippe (118) vorgesehen ist.

13. Schraube nach einem der vorstehenden Ansprüche, **dadurch gekennzeichnet, dass** die Stufen (S1, S2, S3, S4) senkrecht zur Mittellängsachse (32) umlaufen.

## Claims

1. Screw (10; 100) for wooden materials, having a shank (12), wherein the shank (12) has a screw tip (16; 116) and a screw head (18) with a driving formation at the opposite end of the shank (12) from the screw tip (16; 116), and wherein the shank (12) is provided at least in certain portions with a thread (14), **characterized in that** the screw tip (16; 116), starting from a cylindrical part of the shank (12), narrows in several steps (S1, S2, S3, S4) as far as the end of the screw tip (16; 116), wherein the thread (14) extends over the steps (S1, S2, S3, S4), **in that** at least two steps (S1, S2, S3, S4) have a shoulder portion (28, 34, 38, 42), arranged perpendicularly to the longitudinal centre axis (32) or at an angle of between 90° and 45° to the longitudinal centre axis (32), and a step portion (30, 36, 40, 44), arranged parallel to the longitudinal centre axis (32), at an angle of more than 0° as far as an angle of 10° or at an angle of less than 0° as far as an angle of -10° to the longitudinal centre axis (32), wherein the step portion (30, 36, 40, 44), as seen in the direction of the longitudinal centre axis (32) of the screw (10; 100), is at least as long as the should portion (28, 34, 38, 42), **in that**, between each step portion (30, 36, 40, 44) and each shoulder portion (28, 34, 38, 42), an encircling edge for achieving a punching action is formed, and **in that** each shoulder portion (28, 34, 38, 42) and each step portion (30, 36, 40, 44) of a step (S1, S2, S3, S4) forms a closed ring about the longitudinal centre axis (32) of the screw (10; 100).

2. Screw according to Claim 1, **characterized in that** the step portion (30, 36, 40, 44), as seen in the direction of the longitudinal centre axis (32) of the screw (10; 100), is up to ten times as long as the shoulder portion (28, 34, 38, 42) of the step (S1, S2, S3, S4).

3. Screw according to either of the preceding claims, **characterized in that** at least one step, as seen in the direction of the longitudinal centre axis of the screw, has a length that measures at least half the core diameter of the thread on the shank.

4. Screw according to one of the preceding claims, **characterized in that** a length of a plurality of successive steps (S1, S2, S3, S4) decreases in the direction of the free end (26; 126) of the screw tip.

5. Screw according to one of the preceding claims, **characterized in that** the last step (54), as seen in the direction of the end of the screw (10; 100), has a conical step portion (44) arranged between the end (26; 126) of the screw tip (16; 116) and the shoulder portion (42).

6. Screw according to one of the preceding claims, **characterized in that** each step (S1, S2, S3, S4) has a frustoconical shoulder portion (28, 34, 38, 42) with an angle of between 90° and 45°, in particular 25°, to a longitudinal centre axis (32) of the screw (10; 100).

7. Screw according to one of the preceding claims, **characterized in that** each step (S1, S2, S3, S4) has a frustoconical step portion (30; 36; 40) with an angle of between more than 0° as far as an angle of 10° or at an angle of less than 0° as far as an angle of -10° to a longitudinal centre axis (32) of the screw (10; 100).

8. Screw according to one of the preceding claims, **characterized in that** a reduction in diameter at each step (S1, S2, S3, S4) amounts to between 10% and 50%, in particular 18% to 21%, of the core diameter of the thread (14) of the shank (12).

9. Screw according to one of the preceding claims, **characterized in that** the screw tip (16; 116) has a plurality of steps (S1, S2, S3, S4).

10. Screw according to one of the preceding claims, **characterized in that** the thread (14) starts at a distance from the end (26; 126) of the screw tip (16; 116) .

11. Screw according to one of the preceding claims, **characterized in that** a conical portion is arranged between the end (26; 126) of the tip (16; 116) and the start of the thread (14).

12. Screw according to one of the preceding claims, **characterized in that** at least one scraping rib (118) is provided in the region of the screw tip (116).

13. Screw according to one of the preceding claims, **characterized in that** the steps (S1, S2, S3, S4) extend around perpendicularly to the longitudinal centre axis (32) .

## Revendications

1. Vis (10 ; 100) pour matériaux à base de bois, comprenant une tige (12), la tige (12) présentant une pointe de vis (16 ; 116) et une tête de vis (18) avec une formation d'entraînement à l'extrémité de la tige (12) opposée à la pointe de vis (16 ; 116) et la tige (12) étant pourvue au moins par sections d'un filetage (14), **caractérisée en ce que** la pointe de vis (16 ; 116), en partant d'une partie cylindrique de la tige (12), se rétrécit en plusieurs gradins (S1, S2, S3, S4) jusqu'à l'extrémité de la pointe de vis (16 ; 116), le filetage (14) passant sur les gradins (S1, S2, S3, S4), **en ce qu'**au moins deux gradins (S1, S2, S3, S4) présentent une section d'épaulement (28, 34, 38, 42) agencée perpendiculairement à l'axe longitudinal médian (32) ou à un angle entre 90° et 45° par rapport à l'axe longitudinal médian (32) et une section de gradin agencée parallèlement à l'axe longitudinal médian (32), à un angle de plus de 0° jusqu'à un angle de 10°, ou à un angle de moins de 0° jusqu'à un angle de -10° par rapport à l'axe longitudinal médian (32), la section de gradin (30, 36, 40, 44) étant, vue dans la direction de l'axe longitudinal médian (32) de la vis (10 ; 100), au moins aussi longue que la section d'épaulement (28, 34, 38, 42), **en ce qu'**une arête périphérique est formée entre chaque section de gradin (30, 36, 40, 44) et chaque section d'épaulement (28, 34, 38, 42) pour obtenir un effet de poinçonnage, et **en ce que** chaque section d'épaulement (28, 34, 38, 42) et chaque section de gradin (30, 36, 40, 44) d'un gradin (S1, S2, S3, S4) forme un anneau fermé autour de l'axe longitudinal médian (32) de la vis (10 ; 100).

2. Vis selon la revendication 1, **caractérisée en ce que** la section de gradin (30, 36, 40, 44) est, vue dans la direction de l'axe longitudinal médian (32) de la vis (10 ; 100), jusqu'à dix fois plus longue que la section d'épaulement (28, 34, 38, 42) du gradin (S1, S2, S3, S4).

3. Vis selon l'une quelconque des revendications précédentes, **caractérisée en ce qu'**au moins un gradin présente, vu dans la direction de l'axe longitudinal médian de la vis, une longueur qui est au moins égale à la moitié du diamètre de noyau du filetage sur la tige.

4. Vis selon l'une quelconque des revendications précédentes, **caractérisée en ce qu'**une longueur de plusieurs gradins successifs (S1, S2, S3, S4) diminue en direction de l'extrémité libre (26 ; 126) de la pointe de vis.

5. Vis selon l'une quelconque des revendications précédentes, **caractérisée en ce que** le dernier gradin (54), vu en direction de l'extrémité de la vis (10 ; 100), présente une section de gradin conique (44) agencée entre l'extrémité (26 ; 126) de la pointe de vis (16 ; 116) et la section d'épaulement (42).

6. Vis selon l'une quelconque des revendications précédentes, **caractérisée en ce que** chaque gradin (S1, S2, S3, S4) présente une section d'épaulement tronconique (28, 34, 38, 42) avec un angle entre 90° et 45°, notamment de 25°, par rapport à l'axe longitudinal médian (32) de la vis (10 ; 100).

7. Vis selon l'une quelconque des revendications précédentes, **caractérisée en ce que** chaque gradin (S1, S2, S3, S4) présente une section de gradin tronconique (30 ; 36 ; 40) selon un angle entre plus de 0° jusqu'à un angle de 10° ou à un angle de moins de 0° jusqu'à un angle de -10° par rapport à un axe longitudinal médian (32) de la vis (10 ; 100).

8. Vis selon l'une quelconque des revendications précédentes, **caractérisée en ce qu'**une réduction de diamètre à chaque gradin (S1, S2, S3, S4) est comprise entre 10 % et 50 %, notamment entre 18 % et 21 %, du diamètre de noyau du filetage (14) de la tige (12).

9. Vis selon l'une quelconque des revendications précédentes, **caractérisée en ce que** la pointe de vis (16 ; 116) présente plusieurs gradins (S1, S2, S3, S4).

10. Vis selon l'une quelconque des revendications précédentes, **caractérisée en ce que** le filetage (14) débute à une distance de l'extrémité (26 ; 126) de la pointe de vis (16 ; 116).

11. Vis selon l'une quelconque des revendications précédentes, **caractérisée en ce qu'**une section conique est agencée entre l'extrémité (26 ; 126) de la pointe (16 ; 116) et le début du filetage (14).

12. Vis selon l'une quelconque des revendications précédentes, **caractérisée en ce qu'**au moins une nervure de raclage (118) est prévue dans la zone de la pointe de vis (116).

13. Vis selon l'une quelconque des revendications précédentes, **caractérisée en ce que** les gradins (S1, S2, S3, S4) s'étendent perpendiculairement à l'axe longitudinal médian (32).
